(19) **Europäisches Patentamt / European Patent Office / Office européen des brevets**

(11) **EP 4 625 335 A1**

(12) **EUROPEAN PATENT APPLICATION**

(43) Date of publication:
**01.10.2025 Bulletin 2025/40**

(21) Application number: **25165358.0**

(22) Date of filing: **21.03.2025**

(51) International Patent Classification (IPC):
**G06T 11/60** (2006.01)     **G06N 3/047** (2023.01)
**G06V 10/82** (2022.01)

(52) Cooperative Patent Classification (CPC):
**G06N 3/047; G06N 3/044; G06N 3/045;**
**G06N 3/0455; G06N 3/0475; G06N 3/08;**
**G06N 3/084; G06N 3/088; G06N 3/094; G06N 7/01;**
**G06T 11/60**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.03.2024 IN 202421023953**

(71) Applicant: **Tata Consultancy Services Limited Maharashtra (IN)**

(72) Inventors:
• **PALIWAL, Shubham Singh**
  **110001 New Dehli (IN)**
• **JAIN, Arushi**
  **110001 New Delhi (IN)**
• **JAMWAL, Vikram**
  **411028 Pune, Maharashtra (IN)**
• **SHARMA, Monika**
  **110001 New Delhi (IN)**
• **VIG, Lovekesh**
  **110001 New Delhi (IN)**

(74) Representative: **Goddar, Heinz J.**
  **Boehmert & Boehmert**
  **Anwaltspartnerschaft mbB**
  **Pettenkoferstrasse 22**
  **80336 München (DE)**

(54) **METHOD AND SYSTEM FOR DIFFUSION MODELS BASED GENERATION OF CUSTOMIZED TEXTUAL IMAGES**

(57) The present disclosure performs image in-painting with controlled text generations to overcome the challenges persisting in traditional diffusion-based methods, especially when it comes to generating textual content within the image with complex font attributes. In the present disclosure, initially, an input image and a textual prompt and a plurality of control parameters are given as input to the present disclosure. Further, character mask and conditional mask are extracted based on the inputs. Finally accurate customized textual images are generated based on the character mask and the conditional mask using a textual image generating diffusion model. The textual image generating diffusion model generates an intermediate image based on the input image and the random gaussian noise. This intermediate image is iteratively refined to generate a latent vector image. and the accurate customized textual image is generated from the latent vector image using a trained customized character map-guided consistency model.

receive a data comprising an input image, a textual prompt, a mask representing a Region of Interest (RoI) in the input image, a plurality of control parameters for governing manipulation of font color, font type, and background of the input image — 202

generate a character mask pertaining to the input image based on the plurality of control parameters using a character mask generation technique — 204

generate a generation mask comprising a plurality of character regions and a plurality of non-character regions based on the character mask, wherein the plurality of character regions are marked as one and the plurality of non-character regions are marked as zero, wherein a bounding box is generated on each of the plurality of character regions using a renderer — 206

generate a conditional mask pertaining to the input image based on the generated bounding box and the plurality of control parameters using the renderer — 208

generating a customized textual image based on the character mask and the conditional mask associated with the input image using a textual image generating diffuser model by: (i) initializing the textual image generating diffusion model with a random gaussian noise, the character mask, and the generation mask (ii) generating an intermediate image based on the input image and the random gaussian noise (iii) iteratively refining the intermediate image for a predefined number of timesteps to generate a latent vector image and (iv) generating the customized textual image from the latent image using a trained customized character map-guided consistency model — 210

**FIG. 2**

EP 4 625 335 A1

**Description**

CROSS-REFERENCE TO RELATED APPLICATIONS AND PRIORITY

The present application claims priority to Indian application no. Indian Patent Application No.202421023953, filed on March 26, 2024.

TECHNICAL FIELD

The disclosure herein generally relates to the field of image processing and, more particularly, to a method and system for diffusion models based generation of customized textual images.

BACKGROUND

The domain of text-to-image synthesis has witnessed remarkable advancements, with diffusion models emerging as a pivotal paradigm in this domain. The generation of textual images has diverse applications in industries such as entertainment, advertising, education, and product packaging. Creating high-quality text images in diverse formats such as posters, book covers, etc, conventionally requires professional skills and iterative design processes, underscoring the significance of automated solutions. Traditional methods involving manual labor often yield unnatural artifacts due to complex background textures and lighting variations. Current efforts to enhance text rendering quality have turned to diffusion models, exemplified by pioneering frameworks.

Despite these successes, existing models predominantly focus on text encoders, lacking comprehensive control over the generation process. Current works, such as Glyph- Draw and TextDiffuser, aim to enhance control by conditioning on the location and structures of Chinese characters and English characters, respectively. However, the limitation of not supporting multiple text bounding-box generation restricts the applicability of GlyphDraw to various text image scenarios, such as posters and book covers, TextDiffuser addresses the challenges in creating multiple text boxes within images, but still fails in generation of dense and small text. Hence there is a challenge in generating accurate textual images.

<u>SUMMARY</u>

Embodiments of the present disclosure present technological improvements as solutions to one or more of the above-mentioned technical problems recognized by the inventors in conventional systems. For example, in one embodiment, a method for diffusion models based generation of customized textual images is provided. The method includes receiving, via one or more hardware processors, a data comprising an input image, a textual prompt, a mask representing a Region of Interest (RoI) in the input image, a plurality of control parameters for governing manipulation of font colour, font type, and background of the input image. Further, the method includes generating, via the one or more hardware processors, a character mask pertaining to the input image based on the plurality of control parameters using a character mask generation technique. Furthermore, the method includes generating, via the one or more hardware processors, a generation mask comprising a plurality of character regions and a plurality of non-character regions based on the character mask, wherein the plurality of character regions are marked as one and the plurality of non-character regions are marked as zero, wherein a bounding box is generated on each of the plurality of character regions using a renderer. Furthermore, the method includes generating, via the one or more hardware processors, a conditional mask pertaining to the input image based on the generated bounding box and the plurality of control parameters using the renderer. Finally, the method includes generating, via the one or more hardware processors, a customized textual image based on the character mask and the conditional mask associated with the input image using a textual image generating diffusion model by: (i) initializing the textual image generating diffusion model with a random gaussian noise, the character mask, and the generation mask (ii) generating an intermediate image based on the input image and the random gaussian noise (iii) iteratively refining the intermediate image for a predefined number of timesteps to generate a latent vector image and (iv) generating the customized textual image from the latent vector image using a trained customized character map-guided consistency model.

In another aspect, a diffusion models based generation of customized textual images is provided. The system includes at least one memory storing programmed instructions, one or more Input/Output (I/O) interfaces, and one or more hardware processors operatively coupled to the at least one memory, wherein the one or more hardware processors are configured by the programmed instructions to receive a data comprising an input image, a textual prompt, a mask representing a Region of Interest (RoI) in the input image, a plurality of control parameters for governing manipulation of font colour, font type, and background of the input image. Further, the one or more hardware processors are configured by the programmed instructions to generate a character mask pertaining to the input image based on the plurality of control parameters using a character mask generation technique. Furthermore, the one or more hardware processors are configured by the programmed instructions to generate a generation mask comprising a plurality of character regions and a plurality of non-character regions based on the character mask, wherein the plurality of character regions are marked as one and the plurality of non-character regions are marked as zero, wherein a bounding box is generated on each of the plurality of character regions using a renderer. Furthermore, the one or more hardware processors are configured by the programmed instructions to generate a conditional mask pertaining to the input image based on the generated bounding box and the plurality of control parameters using the renderer. Finally, the one or more hardware processors are configured by the programmed instructions to generate a customized textual image based on the character mask and the conditional mask associated with the input image using a textual image generating diffusion model by: (i) initializing the textual image generating diffusion model with a random gaussian noise, the character mask, and the generation mask (ii) generating an intermediate image based on the input image and the random gaussian noise (iii) iteratively refining the intermediate image for a predefined number of timesteps to generate a latent vector image and (iv) generating the customized textual image from the latent vector image using a trained customized character map-guided consistency model.

In yet another aspect, a computer program product including a non-transitory computer-readable medium embodied therein a computer program for diffusion models based generation of customized textual images is provided. The computer readable program, when executed on a computing device, causes the computing device to receive a data comprising an input image, a textual prompt, a mask representing a Region of Interest (RoI) in the input image, a plurality of control parameters for governing manipulation of font colour, font type, and background of the input image. Further, the computer readable program, when executed on a computing device, causes the computing device to generate a character mask pertaining to the input image based on the plurality of control parameters using a character mask generation technique. Furthermore, the computer readable program, when executed on a computing device, causes the computing device to generate a generation mask comprising a plurality of character regions and a plurality of non-character regions based on the character mask, wherein the plurality of character regions are marked as one and the plurality of non-character regions are marked as zero, wherein a bounding box is generated on each of the plurality of character regions using a renderer. Furthermore, the computer readable program, when executed on a computing device, causes the computing device to generate a conditional mask pertaining to the input image based on the generated bounding box and the plurality of control parameters using the renderer. Finally, the computer readable program, when executed on a computing device, causes the computing device to generate a customized textual image based on the character mask and the conditional mask associated with the input image using a textual image generating diffusion model by: (i) initializing the textual image generating diffusion model with a random gaussian noise, the character mask, and the generation mask (ii) generating an intermediate image based on the input image and the random gaussian noise (iii) iteratively refining the intermediate image for a predefined number of timesteps to generate a latent vector image and (iv) generating the customized textual image from the latent vector image using a trained customized character map-guided consistency model.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1A is a functional block diagram of a system for diffusion models based generation of customized textual images, in accordance with some embodiments of the present disclosure.

FIG. 1B illustrates modules of the system for diffusion models based generation of customized textual images, in accordance with some embodiments of the present disclosure.

FIG. 1C illustrates a conditional mask based textual image generating diffusion model, in accordance with some embodiments of the present disclosure.

FIG. 2 illustrate a flow diagram for a processor implemented method for diffusion models based generation of customized textual images, in accordance with some embodiments of the present disclosure.

FIG. 3 illustrates an example flow diagram for character mask and conditional mask generation for the processor implemented method for diffusion models based generation of customized textual images, in accordance with some embodiments of the present disclosure.

FIG. 4 illustrates an example Modified Consistency Decoder architecture (customized character map-guided consistency model) for the processor implemented method for diffusion models based generation of customized textual images, in accordance with some embodiments of the present disclosure.

DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments.

Recent breakthroughs in diffusion models offer distinct advantages over traditional generative adversarial network (GAN)-based approaches. Notably, diffusion models provide enhanced stability throughout the training phase, eliminating the need for intricate adversarial training processes. Moreover, these models provide meticulous control over the quality and diversity of generated content during the diffusion process. In contrast to GAN-centric methodologies, diffusion models leverage the semantic richness inherent in textual prompts. Despite the significant progress made in leveraging the semantic richness of textual prompts for image synthesis, challenges persist in traditional diffusion-based methods, especially when it comes to generating textual content within the image with complex font attributes. For example, the two shortcoming of the conventional approaches are (1) Text Diffuser does not provide explicit control during textual image generation. Only the spatial positioning control is available, while generating images with certain regions allocated for generation of text (2) In cases where the provided layout consists of small sized characters with respect to image dimensions, the model generates distorted characters, which are not visually clear.

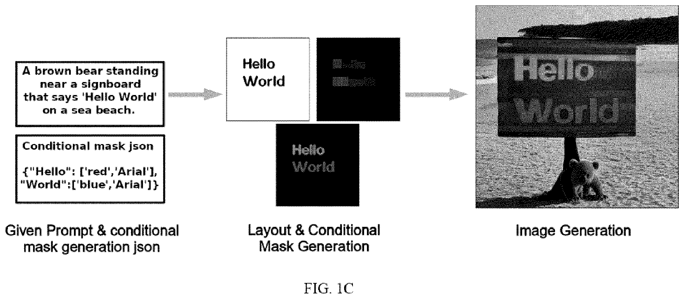

To overcome the challenges of the conventional approaches, embodiments herein provide a method and system for diffusion models based generation of customized textual images. The objective of the present disclosure is to ensure that the resulting merged image exhibits a high degree of harmonization and photorealism. To achieve this objective and to fill the gap in the generation of realistic image, two shortcomings of the conventional methods has been identified and rectified in the present disclosure using a trained customized character map-guided consistency model. The present disclosure generates images or perform image in-painting with controlled text generations. This control extends to font attributes such as type, size, color, and background, all of which are seamlessly integrated into a given reference image layout (in case of image in-painting) as shown in FIG. 1C. Initially, an input image and a textual prompt and a plurality of control parameters are given as input to the system. Further, character mask and conditional mask are extracted based on the inputs. Finally accurate customized textual images are generated based on the character mask and the conditional mask using a textual image generating diffusion model. The textual image generating text diffusion model generates an intermediate image based on the input image and the random gaussian noise. This intermediate image is iteratively refined to generate a latent vector image. The accurate customized textual image is generated from the latent vector image using a trained customized character map-guided consistency model.

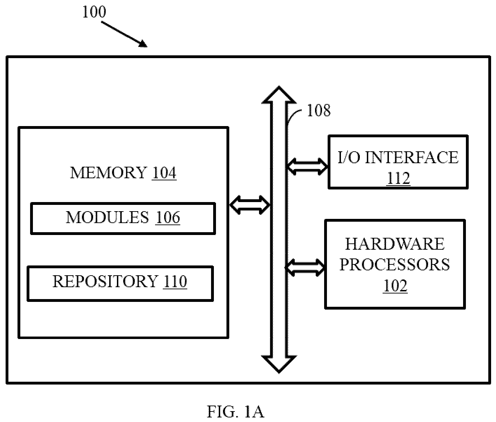

Referring now to the drawings, more particularly to FIG. 1A through FIG. 4, where similar reference characters denote corresponding features consistently throughout the figures, there are shown preferred embodiments, and these embodiments are described in the context of the following exemplary system and/or method.

FIG. 1A is a functional block diagram of a system 100 for diffusion models based generation of customized textual images, in accordance with some embodiments of the present disclosure. The system 100 includes or is otherwise in communication with hardware processors 102, at least one memory such as a memory 104, an Input /Output (I/O) interface 112. The hardware processors 102, memory 104, and the I/O interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, memory 104 includes a plurality of modules 106. Memory 104 also includes a data repository (or repository) 110 for storing data processed, received, and generated by the plurality of modules 106.

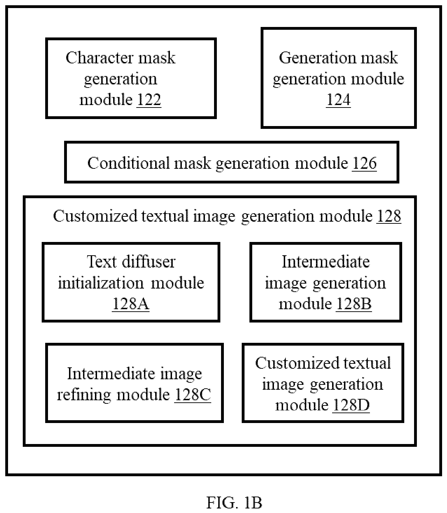

The plurality of modules 106 includes programs or coded instructions that supplement applications or functions performed by the system 100 for diffusion models based generation of customized textual images. The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for diffusion models based generation of customized textual images. For example, the plurality of modules includes a character mask generation module 122 (shown in FIG. 1B), a generation mask generation module 124 (shown in FIG. 1B), a conditional mask generation module 126 (shown in FIG. 1B) and a customized textual image generation module 128 (shown in FIG. 1B). The customized textual image generation module 128 includes a text diffuser initialization module 128A (shown in FIG. 1B), an intermediate image generation module 128B (shown in FIG. 1B), an intermediate image refining module 128C (shown in FIG. 1B) and a customized textual image generation module 128D (shown in FIG. 1B).

FIG. 1B illustrates modules of a processor implemented method for diffusion models based generation of customized textual images, in accordance with some embodiments of the present disclosure.

The data repository (or repository) 110 may include a plurality of abstracted pieces of code for refinement and data that is processed, received, or generated as a result of the execution of the plurality of modules in the module(s) 106.

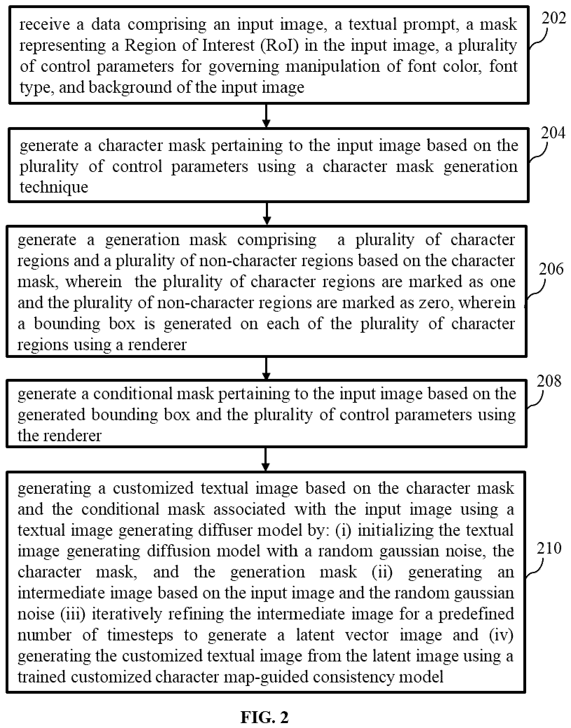

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). The working of the components of the system 100 are explained with reference to the method steps depicted in FIG. 2.

FIG. 2 is an exemplary flow diagrams illustrating a method 200 for diffusion models based generation of customized textual images implemented by the system of FIG. 1A and 1B, according to some embodiments of the present disclosure. In an embodiment, the system 100 includes one or more data storage devices or the memory 104 operatively coupled to the one or more hardware processor(s) 102 and is configured to store instructions for execution of steps of the method 200 by the one or more hardware processors 102. The steps of method 200 of the present disclosure will now be explained with reference to the components or blocks of system 100 as depicted in FIG. 1A and 1B and the steps of flow diagram as depicted in FIG. 2. The method 200 may be described in the general context of computer executable instructions. Generally, computer executable instructions can include routines, programs, objects, components, data structures, procedures, modules, functions, etc., that perform particular functions or implement particular abstract data types. Method 200 may also be practiced in a distributed computing environment where functions are performed by remote processing devices that are linked through a communication network. The order in which the method 200 is described is not intended to be construed as a limitation, and any number of the described method blocks can be combined in any order to implement the method 200, or an alternative method. Furthermore, the method 200 can be implemented in any suitable hardware, software, firmware, or combination thereof.

Now referring to FIG. 2, at step 202 of method 200, one or more hardware processors 102 are configured by the programmed instructions to receive data including an input image, a textual prompt, a mask representing a Region of Interest (RoI) in the input image, a plurality of control parameters for governing manipulation of font color, font type, and background. The textual prompt comprises a plurality of requirements pertaining to customization. For example, to generate an image of a bear standing near a sea beach alongside a signboard which says hello world in red and blue color, the textual prompt as "A brown bear standing near a signboard that says 'Hello World' on a sea beach" and Json text as "{"Hello": ['red','Arial'], "World":['blue','Arial']}".

For example, given a textual prompt $P_t$ and a mask $m$ representing a Region of Interest (RoI) where required texts $g_t$ need to be generated in accordance with prompt $P_t$, the task is to generate image $x$. This generated image should incorporate the text $F(g_t)$ within the designated region, where $F$ represents a set of functions containing control parameters that govern the manipulation of font color, type, and background.

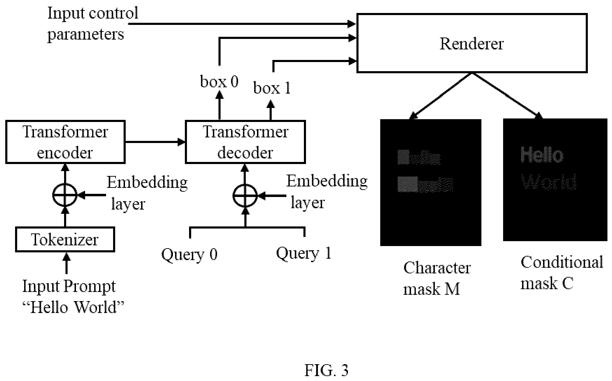

For example, in the first stage of the two-stage pipeline of the present disclosure as shown in FIG. 3, two masks, namely, a character mask $M$ and a conditional mask $C$ were obtained based on the plurality of control parameters provided for $F$, which is explained further in conjunction with step 204 through step 208.

At step 204 of the method 200, the character mask generation module 122, when executed by the one or more hardware processors 102 is configured by the programmed instructions to generate the character mask pertaining to the input image based on the plurality of control parameters using a character mask generation technique. The character mask defines the spatial position of $g_t$ where rectangular box is allotted for each character generation.

The steps for generating the character mask pertaining to the input image based on the plurality of control parameters using the character mask generation technique include the following. Initially extraction of at least one text to be written on the RoI of the input image from the textual prompt using lexical filtering is performed. Further, a bounding box of the extracted text is predicted using a Layout Transformer. Finally, the character mask is generated based on the bounding box using a renderer, wherein character regions are marked with positive values and the non-character regions are marked with zeros.

At step 206 of the method 200, the generation mask generation module 124, when executed by the one or more hardware processors 102 is configured by the programmed instructions to generate a generation mask comprising a plurality of character regions and a plurality of non-character regions based on the character mask, wherein the plurality of character regions are marked as one and the plurality of non-character regions are marked as zero, wherein a bounding box is generated on each of the plurality of character regions using a renderer.

At step 208 of the method 200, the conditional mask generation module 126 when executed by the one or more hardware processors 102 is configured by the programmed instructions to generate a conditional mask pertaining to the input image based on a generated bounding box and the plurality of control parameters using the renderer. For example, the conditional mask C specifies the necessary attributes of $g_t$ based on the functions in $F$, ensuring that the texts are rendered accordingly. This stage takes textual prompt $P_t$ as input, where $g_t$ is specified in single quotes. After obtaining $g_t$ a Layout Transformer based architecture is used to predict bounding box of $g_t$ in the mask image of desired dimension. Subsequently, the character mask M is created by using the bounding box information, $B$. This information is also utilized by the rendering module for each character and combined with the control parameters defined by $F$, to obtain the conditional mask, $C = F(B, g_t)$.

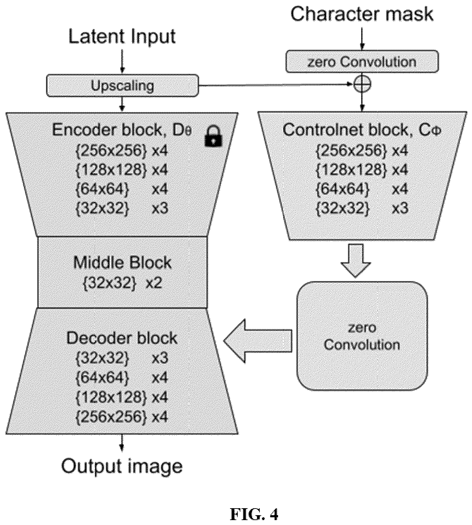

At step 210 of the method 200, the customized textual image generation module 128 when executed by the one or more hardware processors 102 is configured by the programmed instructions to generate a customized textual image based on the character mask and the conditional mask associated with the input image using a textual image generating diffusion model. At step 212A of method 200, the text diffusion model initialization module 128A when executed by the one or more hardware processors are configured by the programmed instructions to initialize the textual image generating diffusion model with a random gaussian noise, the character mask, and the generation mask. Further, at step 212B of method 200, the intermediate image generation module 128B when executed by the one or more hardware processors are configured by the programmed instructions to generate an intermediate image based on the input image and the random gaussian noise. Furthermore, at step 212C of method 200, the intermediate image refining module 128C when executed by the one or more hardware processors are configured by the programmed instructions to iteratively refine the intermediate image for a predefined number of timesteps to generate a latent vector image. Finally, at step 212D of method 200, the customized textual image generation module 128D when executed by the one or more hardware processors are configured by the programmed instructions to generate the customized textual image from the latent vector image using a trained customized character map-guided consistency model shown in FIG. 4.

The customized character map-guided consistency model comprises a trainable ControlNet architecture built over pre-trained consistency decoder. A character map is used in the pre-trained consistency decoder to generate customized textual image from the latent vector image. The customized character map-guided consistency model utilizes the character mask as control parameter for optimal customized textual image generation and the control parameter preserves identity and style of input characters, generating realistic and diverse small characters within the latent space.

For example, the conditional images from $Q_C$ may belong to diverse domains. To ensure coherence in generation, the self-attention map of $x_t$ must encapsulate the essence of $q_{c,t}$, where $q_{c,t}$ represents a sample from $Q_C$ at timestep $t$. Given that, in the generation task at $T$, $x_T$ initializes from noise, a pronounced essence of $q_{c,t}$ in $x_T$ is desirable for creating the self-attention map during initialization. However, as the timestep progresses in the reverse denoising process, it becomes crucial to diminish the essence of $q_{c,t}$ to avoid sharp boundaries. Between the rendered image and the conditional image, facilitating harmonious integration. To control character properties, including font types, color, and background, the forward propagated conditional image $q_{c,t}$ from $Q_C$ at timestep $t$ is introduced into the reconstructing image $x_t$. This is achieved using the weighting function $W_t(x_t, q_{c,t}, C_m, t)$, where $C_m$ is the binary mask representing the conditional image region. It's worth noting that, for enhanced harmonization, an additional threshold may be introduced. After a certain number of timesteps, no injection from $Q_C$ should occur. Nevertheless, defining the appropriate weighting function, $W_t$ can simulate the thresholded behavior without causing abrupt changes in the reverse denoising process.

$$W_{c,t} = W_t\big(x_t, q_{c,t}, C_m, t\big) \dots\dots\dots\dots\dots(1)$$

$$x_t' = x_t * (1 - w_{c,t}) + q_{c,t} * w_{c,t} \dots\dots\dots\dots(2)$$

The present disclosure model employs Variational Autoencoder (VAE) networks to transform images into lowdimensional latent spaces, to enhance computational efficiency during training the diffusion models. However, when images are compressed into lower-dimensional latent spaces, fine details, such as the small-sized characters, might not be adequately preserved. This can result in the generated images not accurately reproducing the original data, which could be problematic in applications where precise details are crucial. To address this issue, a novel decoder was proposed that can generate high-quality small characters from the latent representations learned by a stable diffusion model. The present disclosure introduces a Character Map-guided Consistency Model (CM) that capitalizes on the semantic information of characters, ensuring consistency between the latent and output spaces. The intuition is that the regions containing small characters pose challenges in reconstruction. By incorporating the character guidance map, initially utilized for text generation, into the ControlNet architecture, the decoder gains additional guidance. The CM decoder proves effective in preserving the identity and style of input characters, generating realistic and diverse small characters within the latent space.

The consistency diffusion model consists of a decoder network $f_\theta$ that takes as input a noise tensor $z_t$ sampled from a Gaussian distribution $N(0, I)$, and outputs an image $x_0$ that corresponds to the starting point of the diffusion path trajectory. The model can generate images in one step by sampling a noise tensor $z_T$ from the final timestep of the diffusion process and passing it through the decoder network $f_\theta$. Alternatively, it can also generate images in multiple steps by sampling noise tensors from intermediate timesteps of the diffusion process and using a consistency model to refine the output at each step. This allows the model to tradeoff between speed and quality of generation.

For example, given the pre-trained consistency model DALLE-3 decoder $D_\theta(.,.)$, the parameters $\theta$ are frozen and ControlNet model $C_\phi$ with trainable parameters $\phi$ are introduced, as shown in the FIG. 4 (Modified Consistency Decoder architecture). The architecture takes latent vector, $l_t$ as input for $D_\theta$ and character mask $M$ for $C_\phi$. By adding the ControlNet architecture, a new consistency model $D_{\{\theta,\phi\}}(.,.,.)$ is defined and trained with the loss, as defined in equation (3), which ensures stable training.

$$L_C(\phi) = E_{l,l_t,M,n}[\lambda(t_n)d(D_{\{\theta,\phi\}}(l_{t_{n+1}}, t_{n+1}, M), D_{\{\theta,\phi\}} - (l_{t_n}, t_n, M))] \dots(3)$$

Here, $E[.]$ denotes the expectation over all random variables and $d(x, y)$ is l2 squared distance. $\{\theta, \phi\}\text{-} \leftarrow stopgrad(\{\theta, \theta\})$ and only $\phi$ is kept trainable in the process.

The steps for iteratively refining the intermediate image for the predefined number of timesteps to generate the latent vector image includes the following. Initially, a conditional image is generated based on the intermediate image by performing null-text inversion of the conditional mask using Denoising Diffusion Probabilistic Models (DDPM) sampler, wherein the intermediate image is updated during each iteration. Further, a reconstructed image is generated by performing reverse denoising process on the conditional image using the textual image generating diffusion model. Further, normalization is performed on the reconstructed image using a predetermined reweighting function. Finally, the intermediate image is updated by integrating the conditional image with a normalized reconstructed image, wherein the intermediate image obtained at the end of predefined number of timesteps is considered as the latent vector image. The updated intermediate image is used in the next iteration.

**Experimentation:** The publicly available train and test split of CTW-1500 dataset is used to train the consistency decoder and to evaluate the performance of the present disclosure. Additionally, a custom dataset namely SmallFont-Size dataset is created to showcase the effectiveness of the present disclosure on generating small-sized fonts. The custom dataset includes 200 examples of textual prompts for generating small-sized texts in the images along with spatial character maps.

**Implementation:** The present disclosure utilizes the pre-trained TextDiffuser model and SD (Stable Diffusion)-1.5 model. For the decoder, a pre-trained DALLE-3 consistency decoder available publicly is used. Since the original consistency decoder often distorts the small sized characters in the decoded image, character map assistance is provided for its correction (Refer FIG. 4). Original ControlNet architecture is used to modify the consistency model. The model is trained for 3500 steps over CTW(Curve Text in the Wild)1500 dataset, with effective batch size of 96, using gradient accumulation. During inference, the generated image resolution of 512×512 is used, which is computed over CFG (Classifier Free Guidance) scale 7.5.

Results: To evaluate the reconstruction performance of the trained model, MSE (Mean Squared Error), PSNR (Peak Signal to Noise Ratio) and SSIM (Structural Similarity Index) metrics are used and evaluated over CTW-1500 test set in Table I. A vanilla decoder enhancing model is also created, which worked by cropping original image into smaller fragments and upscaling them. The Decoder Enhance model refined these fragment for characters and finally the images were merged back to original resolution. Compared with the Controlnet-canny model, Text Diffuser and Decoder Enhance, it is evident that CustomText decoder (decoder of the present disclosure) performs best in all the three metrics.

Furthermore, to evaluate readability, and to verify the quality of the reconstructed image of Table I, EasyOCR is used. Here, an exact match of individual words is taken to compute the results. Additionally, the comparison results of CustomText for generating small-sized texts in the images is shown in Table II over SmallFontSize dataset using OCR performance and ClipScore. Although the ControlNet Consistency model (the present disclosure) outperforms other existing methods in the OCR results, however, original TextDiffuser model performs better in terms of Clipscore by a small margin of 0.0015.

Table I

|  | CTW-1500 | | |
|---|---|---|---|
| Method | MSE↓ | PSNR↑ | SSIM↑ |
| Controlnet-canny | 0.033 | 17.832 | 0.656 |
| Text Diffuser | 0.031 | 17.82 | 0.6601 |
| Decoder Enhance | 0.027 | 18.17 | 0.6874 |
| Present disclosure | 0.019 | 21.33 | 0.712 |

Table II

|  | SmallFontsize Dataset | | | |
|---|---|---|---|---|
| Method | Precision | Recall | F1 | ClipScore |
| StableDiffusion | 0.0936 | 0.1174 | 0.1041 | 0.512 |
| Controlnet-canny | 0.6332 | 0.6572 | 0.645 | 0.6321 |
| TextDiffuser | 0.792 | 0.7863 | 0.7891 | 0.6407 |
| Decoder Enhance | 0.7894 | 0.7911 | 0.7902 | 0.6407 |
| Present disclosure | 0.8131 | 0.815 | 0.814 | 0.6392 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of the present disclosure herein address the unresolved problem of generating high-quality images with customized fonts. The present disclosure can be used as a tool for incremental editing to obtain the best quality textual images such as posters, advertisement, and the like, as per the user's requirement.

It is to be understood that the scope of the protection is extended to such a program and in addition to a computer-readable means having a message therein such computer-readable storage means contain program-code means for implementation of one or more steps of the method when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means, and software means. The method embodiments described herein could be implemented in hardware and software. The device may also include software means. Alternatively, the embodiments may be implemented on different hardware devices, e.g., using a plurality of CPUs, GPUs and edge computing devices.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Alternatives (including equivalents, extensions, variations, deviations, etc., of those described herein) will be apparent to persons skilled in the relevant art(s) based on the teachings contained herein. Such alternatives fall within the scope and spirit of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise. Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e. non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1.  A processor-implemented method (200), the method comprising:

> receiving (202), via one or more hardware processors, a data comprising an input image, a textual prompt, a mask representing a Region of Interest (RoI) in the input image, a plurality of control parameters for governing manipulation of font colour, font type, and background of the input image;
> generating (204), via the one or more hardware processors, a character mask pertaining to the input image based on the plurality of control parameters using a character mask generation technique;
> generating (206), via the one or more hardware processors, a generation mask comprising a plurality of character regions and a plurality of non-character regions based on the character mask, wherein the plurality of character regions are marked as one and the plurality of non-character regions are marked as zero, wherein a bounding box is generated on each of the plurality of character regions using a renderer;
> generating (208), via the one or more hardware processors, a conditional mask pertaining to the input image based on the generated bounding box and the plurality of control parameters using the renderer; and
> generating (210), via the one or more hardware processors, a customized textual image based on the character mask and the conditional mask associated with the input image using a textual image generating diffusion model by:
>
>> initializing the textual image generating diffusion model with a random gaussian noise, the character mask, and the generation mask;
>> generating an intermediate image based on the input image and the random gaussian noise;
>> iteratively refining the intermediate image for a predefined number of timesteps to generate a latent vector image; and
>> generating the customized textual image from the latent vector image using a trained customized character map-guided consistency model.

2.  The method as claimed in claim 1, wherein generating the character mask pertaining to the input image based on the plurality of control parameters using the character mask generation technique comprises:

> extracting at least one text to be written on the RoI of the input image from the textual prompt using lexical filtering;
> predicting the bounding box of the extracted text using a Layout Transformer; and
> generating the character mask based on the bounding box using a renderer, wherein character regions are marked with positive values and the non-character regions are marked with zeros.

3.  The method as claimed in claim 1, wherein the textual prompt comprises a plurality of requirements pertaining to customization.

4.  The method as claimed in claim 1, wherein iteratively refining the intermediate image for the predefined number of timesteps to generate the latent vector image comprises:

generating a conditional image based on the intermediate image by performing null-text inversion of the conditional mask using Denoising Diffusion Probabilistic Models (DDPM) sampler, wherein the intermediate image is updated during each iteration;

generating a reconstructed image by performing reverse denoising process on the conditional image using the textual image generating diffusion model;

performing normalization on the reconstructed image using a predetermined reweighting function; and

updating the intermediate image by integrating the conditional image with the normalized reconstructed image, wherein the intermediate image obtained at the end of predefined number of timesteps is considered as the latent vector image.

5. The method as claimed in claim 1, wherein the customized character map-guided consistency model comprises a trainable controlnet architecture built over pre-trained consistency decoder, wherein a character map is used in the pre-trained consistency decoder to generate customized textual image from the latent vector image, wherein the customized character map-guided consistency model utilizes the character mask as control parameter for optimal customized textual image generation, and wherein the control parameter preserves identity and style of input characters, generating realistic and diverse small characters within the latent space.

6. A system (100) comprising:

at least one memory (104) storing programmed instructions; one or more Input /Output (I/O) interfaces (112); and one or more hardware processors (102) operatively coupled to the at least one memory (104), wherein the one or more hardware processors (102) are configured by the programmed instructions to:

receive a data comprising an input image, a textual prompt, a mask representing a Region of Interest (RoI) in the input image, a plurality of control parameters for governing manipulation of font colour, font type, and background of the input image;

generate a character mask pertaining to the input image based on the plurality of control parameters using a character mask generation technique;

generate a generation mask comprising a plurality of character regions and a plurality of non-character regions based on the character mask, wherein the plurality of character regions are marked as one and the plurality of non-character regions are marked as zero, wherein a bounding box is generated on each of the plurality of character regions using a renderer;

generate a conditional mask pertaining to the input image based on the generated bounding box and the plurality of control parameters using the renderer; and

generate a customized textual image based on the character mask and the conditional mask associated with the input image using a textual image generating diffusion model by:

initializing the textual image generating diffusion model with a random gaussian noise, the character mask, and the generation mask;

generating an intermediate image based on the input image and the random gaussian noise;

iteratively refining the intermediate image for a predefined number of timesteps to generate a latent vector image; and

generating the customized textual image from the latent vector image using a trained customized character map-guided consistency model.

7. The system as claimed in claim 6, wherein generating the character mask pertaining to the input image based on the plurality of control parameters using the character mask generation technique comprises:

extracting at least one text to be written on the RoI of the input image from the textual prompt using lexical filtering;

predicting the bounding box of the extracted text using a Layout Transformer; and

generating the character mask based on the bounding box using a renderer, wherein character regions are marked with positive values and the non-character regions are marked with zeros.

8. The system as claimed in claim 6, wherein the textual prompt comprises a plurality of requirements pertaining to customization.

9. The system as claimed in claim 6, wherein iteratively refining the intermediate image for the predefined number of timesteps to generate the latent vector image comprises:

generating a conditional image based on the intermediate image by performing null-text inversion of the conditional mask using Denoising Diffusion Probabilistic Models (DDPM) sampler, wherein the intermediate image is updated during each iteration;

generating a reconstructed image by performing reverse denoising process on the conditional image using the textual image generating diffusion model;

performing normalization on the reconstructed image using a predetermined reweighting function; and

updating the intermediate image by integrating the conditional image with the normalized reconstructed image, wherein the intermediate image obtained at the end of predefined number of timesteps is considered as the latent vector image.

10. The system as claimed in claim 6, wherein the customized character map-guided consistency model comprises a trainable controlnet architecture built over pre-trained consistency decoder, wherein a character map is used in the pre-trained consistency decoder to generate customized textual image from the latent vector image, wherein the customized character map-guided consistency model utilizes the character mask as control parameter for optimal customized textual image generation, and wherein the control parameter preserves identity and style of input characters, generating realistic and diverse small characters within the latent space.

11. One or more non-transitory machine-readable information storage mediums comprising one or more instructions which when executed by one or more hardware processors cause:

receiving, a data comprising an input image, a textual prompt, a mask representing a Region of Interest (RoI) in the input image, a plurality of control parameters for governing manipulation of font colour, font type, and background of the input image;

generating, a character mask pertaining to the input image based on the plurality of control parameters using a character mask generation technique;

generating, a generation mask comprising a plurality of character regions and a plurality of non-character regions based on the character mask, wherein the plurality of character regions are marked as one and the plurality of non-character regions are marked as zero, wherein a bounding box is generated on each of the plurality of character regions using a renderer;

generating, a conditional mask pertaining to the input image based on the generated bounding box and the plurality of control parameters using the renderer; and

generating a customized textual image based on the character mask and the conditional mask associated with the input image using a textual image generating diffusion model by:

initializing the textual image generating diffusion model with a random gaussian noise, the character mask, and the generation mask;

generating an intermediate image based on the input image and the random gaussian noise;

iteratively refining the intermediate image for a predefined number of timesteps to generate a latent vector image; and

generating the customized textual image from the latent vector image using a trained customized character map-guided consistency model.

12. The one or more non-transitory machine-readable information storage mediums as claimed in claim 11, wherein generating the character mask pertaining to the input image based on the plurality of control parameters using the character mask generation technique comprises:

extracting at least one text to be written on the RoI of the input image from the textual prompt using lexical filtering;

predicting the bounding box of the extracted text using a Layout Transformer; and

generating the character mask based on the bounding box using a renderer, wherein character regions are marked with positive values and the non-character regions are marked with zeros

13. The one or more non-transitory machine-readable information storage mediums as claimed in claim 11, wherein the textual prompt comprises a plurality of requirements pertaining to customization.

14. The one or more non-transitory machine-readable information storage mediums as claimed in claim 11, wherein iteratively refining the intermediate image for the predefined number of timesteps to generate the latent vector image comprises:

generating a conditional image based on the intermediate image by performing null-text inversion of the conditional mask using Denoising Diffusion Probabilistic Models (DDPM) sampler, wherein the intermediate image is updated during each iteration;

generating a reconstructed image by performing reverse denoising process on the conditional image using the textual image generating diffusion model;

performing normalization on the reconstructed image using a predetermined reweighting function; and

updating the intermediate image by integrating the conditional image with the normalized reconstructed image, wherein the intermediate image obtained at the end of predefined number of timesteps is considered as the latent vector image.

15. The one or more non-transitory machine-readable information storage mediums as claimed in claim 11, wherein the customized character map-guided consistency model comprises a trainable controlnet architecture built over pre-trained consistency decoder, wherein a character map is used in the pre-trained consistency decoder to generate customized textual image from the latent vector image, wherein the customized character map-guided consistency model utilizes the character mask as control parameter for optimal customized textual image generation, and wherein the control parameter preserves identity and style of input characters, generating realistic and diverse small characters within the latent space.

100

FIG. 1A

Character mask
generation
module 122

Generation mask
generation module
124

Conditional mask generation module 126

Customized textual image generation module 128

Text diffuser
initialization module
128A

Intermediate
image generation
module 128B

Intermediate image
refining module 128C

Customized textual
image generation
module 128D

FIG. 1B

A brown bear standing
near a signboard
that says 'Hello World'
on a sea beach.

Conditional mask json

{"Hello": ['red','Arial'],
"World":['blue','Arial']}

Given Prompt & conditional
mask generation json

Hello
World

Layout & Conditional
Mask Generation

Image Generation

FIG. 1C

receive a data comprising an input image, a textual prompt, a mask representing a Region of Interest (RoI) in the input image, a plurality of control parameters for governing manipulation of font color, font type, and background of the input image

202

generate a character mask pertaining to the input image based on the plurality of control parameters using a character mask generation technique

204

generate a generation mask comprising a plurality of character regions and a plurality of non-character regions based on the character mask, wherein the plurality of character regions are marked as one and the plurality of non-character regions are marked as zero, wherein a bounding box is generated on each of the plurality of character regions using a renderer

206

generate a conditional mask pertaining to the input image based on the generated bounding box and the plurality of control parameters using the renderer

208

generating a customized textual image based on the character mask and the conditional mask associated with the input image using a textual image generating diffuser model by: (i) initializing the textual image generating diffusion model with a random gaussian noise, the character mask, and the generation mask (ii) generating an intermediate image based on the input image and the random gaussian noise (iii) iteratively refining the intermediate image for a predefined number of timesteps to generate a latent vector image and (iv) generating the customized textual image from the latent image using a trained customized character map-guided consistency model

210

**FIG. 2**

FIG. 3

**FIG. 4**

Europäisches
Patentamt

European
Patent Office

Office européen
des brevets

# EUROPEAN SEARCH REPORT

**Application Number**

EP 25 16 5358

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Chen Jingye ET AL: "TextDiffuser: Diffusion Models as Text Painters", , 13 June 2023 (2023-06-13), XP093238971, Retrieved from the Internet: URL:https://arxiv.org/pdf/2305.10855v4 [retrieved on 2025-08-15] * abstract * * page 1 - page 9 * * page 11 - page 12 * * page 19; figures 1, 2, 5; table 5 * | 1-15 | INV. G06T11/60 G06N3/047 G06V10/82 |
| A | EP 4 047 547 A1 (PALO ALTO RES CT INC [US]) 24 August 2022 (2022-08-24) * paragraph [0017] - paragraph [0035]; figures 2, 4 * | 1-15 | |
| A | NING YU ET AL: "LayoutDETR: Detection Transformer Is a Good Multimodal Layout Designer", ARXIV.ORG, CORNELL UNIVERSITY LIBRARY, 201 OLIN LIBRARY CORNELL UNIVERSITY ITHACA, NY 14853, 24 March 2023 (2023-03-24), XP091467323, * abstract * | 1-15 | |

**TECHNICAL FIELDS SEARCHED (IPC)**

G06N
G06T
G06V

The present search report has been drawn up for all claims

| Place of search | Date of completion of the search | Examiner |
|---|---|---|
| The Hague | 15 August 2025 | Lauritzen, Jan |

EPO FORM 1503 03.82 (P04C01)

## ANNEX TO THE EUROPEAN SEARCH REPORT
## ON EUROPEAN PATENT APPLICATION NO.

EP 25 16 5358

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2025

| Patent document cited in search report | Publication date | Patent family member(s) | Publication date |
|---|---|---|---|
| EP 4047547 A1 | 24-08-2022 | EP 4047547 A1 | 24-08-2022 |
| | | JP 2022095565 A | 28-06-2022 |
| | | US 2022189088 A1 | 16-06-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421023953